# FASCICULE DE BREVET EUROPEEN

(11) **EP 0 331 596 B1**
(45) Date de publication et mention de la délivrance du brevet: **06.04.1994**
(21) Numéro de dépôt: 89440015.9
(22) Date de dépôt: 22.02.1989
(51) Int. Cl.: B29C 45/14, B29C 51/16

(54) **yrocédé de fabrication automatique de récipients avec étiquette d'habillage, en particulier pour récipients à section circulaire et dispositif pour la mise en oeuvre de ce procédé**
Verfahren zum automatischen Herstellen von einem mit einem Etikett bekleideten Behälter, insbesondere Behälter mit rundem Querschnitt, und Vorrichtung zur Durchführung dieses Verfahrens
Process for the automatic manufacture of containers with coating labels, in particular for circular containers, and a device for carrying out this process

(30) Priorité: 29.02.1988 FR 8802674
(43) Date de publication de la demande: 06.09.1989
(73) Titulaire: GIZEH, Sàrl, F-67330 Bouxwiller (FR)
(72) Inventeur: Stein-Teyssandier, Jeannot, F-67330 Bouxwiller-Obermodern (FR)
(74) Mandataire: Nuss, Pierre

(56) Documents cités:
- CH-A- 556 728
- CH-A- 638 718
- FR-A- 2 009 611
- US-A- 4 645 193

## Description

La présente invention concerne le domaine de la fabrication de récipients en matière synthétique destinés notamment à l'emballage de produits alimentaires et munis d'étiquettes d'habillage, et a pour objet un procédé de fabrication automatique de tels récipients avec étiquette d'habillage, en particulier des récipients à section circulaire.

L invention a également pour objet un dispositif pour la mise en oeuvre de ce procédé.

Les récipients du type précité sont généralement munis d'étiquettes portant la désignation commerciale de leur contenu ainsi que les constituants de ce dernier.

Actuellement, la mise en place de ces étiquettes est effectuée, soit, après moulage, au moyen de machines à étiqueter ou par impression, soit par mise en place manuelle des étiquettes dans le moule, avant moulage.

Dans le premier cas, il est nécessaire de disposer de machines spéciales réalisant l'étiquetage ou l'impression, et une couverture parfaite de toute la surface de la paroi des récipients, qui sont généralement de forme tronconique, est très difficile à obtenir.

Dans le cas d'une mise en place manuelle des étiquettes dans le moule, il existe un important risque d'accident pour l'opérateur réalisant ladite mise en place et le rendement est très faible et incompatible avec une fabrication en grande série.

Il a également été proposé de réaliser une mise en place automatique d'étiquettes dans des moules présentant une forme carrée, rectangulaire ou autre, dans laquelle ladite étiquette comporte une partie de fond et une partie de paroi latérale en plusieurs éléments reliés au fond. Des étiquettes de ce type ne réalisent, cependant, généralement pas une couverture totale de la périphérie de la paroi.

Enfin, il est également connu par FR-A-2 009 611 un dispositif d'application d'une étiquette, ou analogue, dans la matrice d'un moule, avant injection d'une matière synthétique pour la réalisation de récipients utilisant un mandrin tronconique présentant une surface d'aspiration pour ladite étiquette, qui est enroulée sur ledit mandrin au moyen d'un dispositif annexe d' application comportant des rouleaux montés de manière mobile sur un support, l'étiquette étant amenée par un magasin mobile sur ledit support.

Ce mode de réalisation du dispositif d'application est, cependant, très complexe, notamment en ce qui concerne la réalisation du mandrin tronconique et du dispositif d'application.

La présente invention a pour but de pallier ces inconvénients.

Elle a, en effet, pour objet un procédé de fabrication automatique de récipients avec étiquette d'habillage, en particulier pour récipients à section circulaire, consistant essentiellement à prélever des étiquettes individuellement dans un magasin au moyen d'un bras, à les insérer dans la matrice du moule, a fermer le moule de manière à appliquer lesdites étiquettes sur la surface de paroi du moule, puis à injecter la matière synthétique constitutive du récipient dans ce dernier, caractérisé en ce qu'il consiste à prélever les étiquettes au moyen de ventouses de préhension, à les transférer à deux pinces rotatives les roulant en forme de cornet, puis à saisir les étiquettes ainsi roulées au moyen d'une pince de transfert les insérant dans la matrice.

L'invention a également pour objet un dispositif pour la mise en oeuvre de ce procédé, essentiellement constitué par un magasin d'alimentation d'étiquettes, par un bras de prélèvement des étiquettes individuellement hors du magasin et de transfert de ces dernières, caractérisé en ce qu'il est muni, en outre, de deux pinces rotatives de roulage desdites étiquettes en forme de cornet et d'une pince de transfert des étiquettes roulées dans la matrice du moule.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale du dispositif pour la mise en oeuvre du procédé, et
la figure 2 est une vue en coupe, à plus grande échelle, de la matrice du moule.

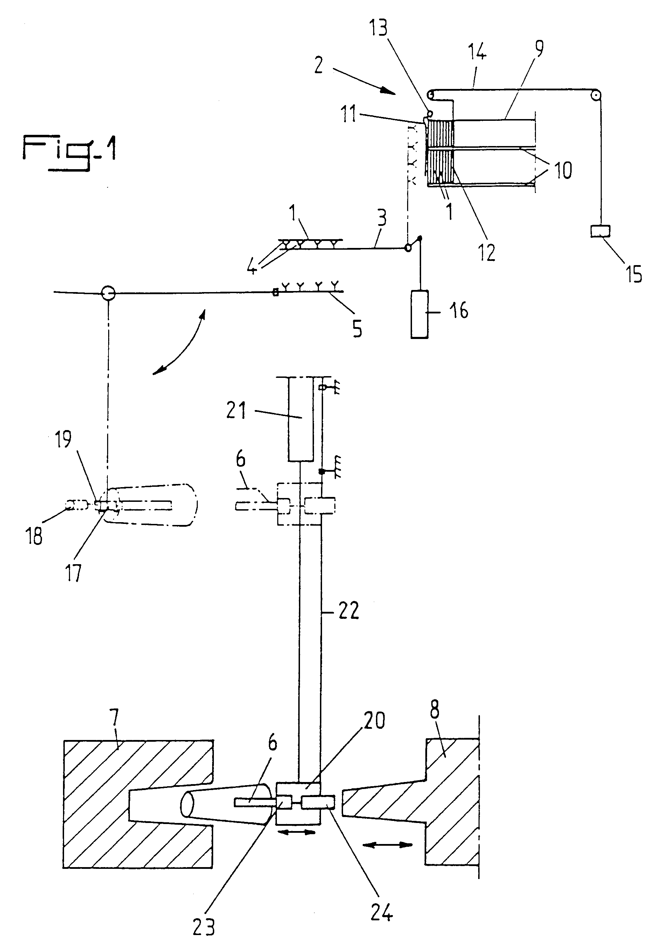

Conformément à l'invention, et comme le montre plus particulièrement, à titre d'exemple, la figure 1 des dessins annexés, le procédé de fabrication automatique de récipients avec étiquette d'habillage, en particulier pour récipients à section circulaire, consiste essentiellement à prélever des étiquettes 1 individuellement dans un magasin 2 au moyen d'un bras 3 muni de ventouses de préhension 4. Les étiquettes 1 sont transférées à deux pinces rotatives 5 qui les roulent en forme de cornet, puis les étiquettes ainsi roulées sont saisies par une pince de transfert 6 qui les insère dans la matrice 7 du moule. Après la fermeture du moule, qui a pour effet d'appliquer les étiquettes 1 sous l'action du poinçon 8 contre la surface de paroi de la matrice 7 du moule, la matière synthétique constitutive du récipient est injectée dans ledit moule.

Le magasin 2 de réception des étiquettes 1 consiste essentiellement en un dispositif 9 de guidage desdites étiquettes 1 comportant des glissières 10 de support et de maintien latéral, des pattes latérales élastiques antérieures 11 de maintien desdites étiquettes 1 à l'extrémité d'extraction du dispositif 9 et un moyen 12 de déplacement sous charge des étiquettes 1.

Le moyen 12 de déplacement sous charge des étiquettes 1 est avantageusement constitué sous forme d'un chariot guidé sur les glissières 10 de maintien latéral et chargé, par l'intermédiaire d'un cable 14, par un contre-poids 15. Ainsi, le paquet d'étiquettes 1 est continuellement pressé contre les pattes latérales élastiques antérieures 11 de maintien des étiquettes 1 à l'extrémité d extraction du dispositif de guidage 9. Les pattes latérales antérieures 11 sont constituées, de préférence, de manière connue, par des lames élastiques fixées à leur extrémité supérieure sur le cadre d'assemblage des glissières 10 de maintien latéral et de support des étiquettes 1.

Selon une autre caractéristique de l'invention, le dispositif est muni d'un moyen 13 de séparation des étiquettes lors de leur extraction du magasin 2 qui est constitué, de préférence, par une rampe à air s'étendant transversalement au-dessus de l'extrémité d'extraction du magasin 2 et raccordé à une source d'air sous pression. Ainsi, lors de la saisie de l'étiquette d'extrémité au moyen des ventouses 4 du bras 3, l'air, projeté par la rampe formant le moyen 13, favorise le décollement de ladite étiquette 1 du paquet contenu dans le magasin 2.

Le bras 3 est muni de ventouses de préhension 4 reliées à une source de pression négative et est avantageusement monté sous le magasin 2 avec possibilité de pivotement d'une position verticale d extraction des étiquettes 1 hors du magasin 2 vers une position horizontale de transfert de chaque étiquette à plat vers les deux pinces rotatives 5, par actionnement au moyen d'un vérin 16.

Les pinces rotatives 5 sont montées sur un support 17 et actionnées chacune, par l'intermédiaire d'un bras 19, par un vérin rotatif 18 solidaire dudit support 17. Ainsi, les pinces 5 sont disposées de manière excentrée par rapport à l'axe des vérins rotatifs des vérins 18 et effectuent lors de l'actionnement de ces derniers un trajet en arc de cercle qui a pour effet d'amener les extrémités libres des étiquettes 1 en recouvrement afin de réaliser une forme en cornet.

La pince de transfert 6 est montée sur un chariot 20, déplaçable au moyen d'un vérin 21 sur une glissière de guidage 22 entre une position en face du support 17 des pinces rotatives 5 et la matrice 7 du moule, ledit chariot 20 étant pourvu, en outre, d un support 23, de déplacement perpendiculaire de la pince 6 en direction du support 17 des pinces rotatives 5, actionné par un vérin 24. Ce dernier permet un déplacement de la pince 6 en direction de l'étiquette roulée en cornet afin de réaliser un pincement de celle-ci au niveau du recouvrement de ses extrémités, puis un retrait du support 23 en position de départ avant le déplacement du chariot 20 en direction de la matrice 7 sous l'action du vérin 21. A l'arrivée devant ladite matrice 7, le vérin 24 est remis sous pression afin de déplacer la pince 6 avec le cornet obtenu en direction de la matrice du moule et d'insérer ledit cornet dans ladite matrice 7.

De manière connue, les différents déplacements du bras 3, des pinces rotatives 5 et de la pince de transfert 6, ainsi que la commande de mise sous pression négative des ventouses de préhension 4 et de mise sous pression de la rampe à air formant le moyen 13 de séparation des étiquettes lors de leur extraction du magasin 2, sont commandés et contrôlés par des dispositifs de détection connus tels que des palpeurs, des cellules photoélectriques ou autres, et la succession logique de cesdits commandes et controles est assurée par un automate programmable.

Le dispositif décrit ci-dessus peut avantageusement être monté sur un chassis (non représenté) disposé en position de service au-dessus ou à coté de la machine de moulage par injection, de manière escamotable par pivotement, par coulissement sur des glissières solidaires de ladite machine de moulage, ou encore par éloignement par simple déplacement sur un train de roulement.

Conformément à une autre caractéristique de l'invention, et comme le montre plus particulièrement la figure 2 des dessins annexés, la matrice 7 du moule est pourvue dans son fond d'un talon périphérique 25 d'insertion du bord correspondant de l'étiquette 1.

Selon une variante de réalisation de l'invention, non représentée aux dessins annexés, le dispositif comporte un nombre de magasins 2, de bras de prélèvement 3, de paires de pinces 5 et de pinces de transfert 6 correspondant au nombre de matrices 7 d'un moule multi-cavités 8. Ainsi, l'alimentation automatique d'un moule multi-cavités est également rendu possible.

En outre, selon une autre caractéristique de l'invention, les étiquettes 1 présentent avantageusement une hauteur au moins égale à la hauteur d'une paroi de récipient comprise entre le talon et la plage de thermoscellage ou le premier épaulement supérieur dudit récipient et donc au moins égale à la distance séparant le fond du talon périphérique du haut du poinçon ou du premier épaulement dudit poinçon, en position de fermeture du moule, l'étiquette recouvrant entièrement la surface de paroi du récipient.

Le mode de réalisation décrit ci-dessus de la matrice 7 et des étiquettes 1 permet d assurer une application du bord inférieur de l'étiquette dans le fond du talon 25 de ladite matrice 7 et une application du bord supérieur contre le haut du poinçon 26 du moule ou contre le premier épaulement de ce dernier, de sorte qu'un débordement de matière lors du moulage par injection du récipient vers l'extérieur de l'étiquette est empêché avec certitude, le bord supérieur de l étiquette 1 se repliant lors de ladite injection vers l'extérieur contre la plage de thermoscellage ou le premier épaulement. Ainsi, il est possible d assurer de manière certaine un recouvrement total de la paroi du récipient par l'étiquette 1 jusqu'à la plage de thermoscellage ou jusqu'au premier épaulement.

## Revendications

1. Procédé de fabrication automatique de récipients avec étiquette d'habillage, en particulier pour récipients à section circulaire, consistant essentiellement à prélever des étiquettes (1) individuellement dans un magasin (2) au moyen d'un bras (3), à les insérer dans la matrice (7) du moule, à fermer le moule de manière à appliquer lesdites étiquettes (1) sur la surface de paroi du moule, puis à injecter la matière synthétique constitutive du récipient dans ce dernier, caractérisé en ce qu'il consiste à prélever les étiquettes (1) au moyen de ventouses de préhension (4), à les transférer à deux pinces rotatives (5) les roulant en forme de cornet, puis à saisir les étiquettes (1) ainsi roulées au moyen d'une pince de transfert (6) les insérant dans la matrice (7).

2. Dispositif pour la mise en oeuvre du procédé suivant la revendication 1, essentiellement constitué par un magasin (2) d'alimentation d'étiquettes (1), par un bras (3) de prélèvement des étiquettes (1) individuellement hors du magasin (2) et de transfert de ces dernières, caractérisé en ce qu'il est muni, en outre, de deux pinces rotatives (5) de roulage desdites étiquettes (1) en forme de cornet et d'une pince (6) de transfert des étiquettes (1) roulées dans la matrice (7) du moule.

3. Dispositif, suivant la revendication 2, caractérisé en ce que le magasin (2) de réception des étiquettes (1) consiste essentiellement en un dispositif (9) de guidage desdites étiquettes (1) comportant des glissières (10) de support et de maintien latéral, des pattes latérales élastiques antérieures (11) de maintien desdites étiquettes (1) à l'extrémité d'extraction du dispositif (9) et un moyen (12) de déplacement sous charge des étiquettes (1).

4. Dispositif, suivant la revendication 3, caractérisé en ce que le moyen (12) de déplacement sous charge des étiquettes (1) est avantageusement constitué sous forme d'un chariot guidé sur les glissières (10) de maintien latéral et chargé, par l'intermédiaire d'un câble (14), par un contre-poids (15).

5. Dispositif, suivant la revendication 3, caractérisé en ce qu'il est muni d'un moyen (13) de séparation des étiquettes lors de leur extraction du magasin (2) qui est constitué, de préférence, par une rampe à air s'étendant transversalement au-dessus de l'extrémité d'extraction du magasin (2) et raccordé à une source d'air sous pression.

6. Dispositif, suivant la revendication 2, caractérisé en ce que le bras (3) est muni de ventouses de préhension (4) reliées à une source de pression négative et est avantageusement monté sous le magasin (2) avec possibilité de pivotement d'une position verticale d'extraction des étiquettes (1) hors du magasin (2) vers une position horizontale de transfert de chaque étiquette à plat vers les deux pinces rotatives (5), par actionnement au moyen d'un vérin (16).

7. Dispositif, suivant la revendication 2, caractérisé en ce que les pinces rotatives (5) sont montées sur un support (17) et actionnées chacune, par l'intermédiaire d'un bras (19), par un vérin rotatif (18) solidaire dudit support (17).

8. Dispositif, suivant l'une quelconque des revendications 2 et 7, caractérisé en ce que la pince de transfert (6) est montée sur un chariot (20), déplaçable au moyen d'un vérin (21) sur une glissière de guidage (22) entre une position en face du support (17) des pinces rotatives (5) et la matrice (7) du moule, ledit chariot (20) étant pourvu, en outre, d'un support (23), de déplacement perpendiculaire de la pince (6) en direction du support (17) des pinces rotatives (5), actionné par un vérin (24).

9. Dispositif, suivant l'une quelconque des revendications 2 à 8 caractérisé en ce qu'il est monté sur un châssis disposé en position de service au-dessus ou à côté de la machine de moulage par injection, de manière escamotable par pivotement, par coulissement sur des glissières solidaires de ladite machine de moulage, ou encore par éloignement par simple déplacement sur un train de roulement.

10. Dispositif, suivant la revendication 2, caractérisé en ce que la matrice (7) du moule est pourvue dans son fond d'un talon périphérique (25) d'insertion du bord correspondant de l'étiquette (1).

11. Dispositif, suivant l'une quelconque des revendications 2 à 10, caractérisé en ce qu'il comporte un nombre de magasins (2), de bras de prélèvement (3), de paires de pinces (5) et de pinces de transfert (6) correspondant au nombre de matrices (7) d'un moule multi-cavités (8).

## Claims

1. Automatic manufacturing process for receptacles with a packaging label, in particular for receptacles with a circular cross section, consisting essentially of taking labels (1) individually from a magazine (2) by means of an arm (3), inserting them into the bottom die (7) of the mould, closing the mould so as to press the said labels (1) against the surface of the wall of the mould, and then injecting the synthetic material making up the receptacle into the mould, characterised in that it consists of taking the labels (1) by means of gripping suckers (4), transferring them to two rotary grippers (5), rolling them into the shape of a cornet and then gripping the labels (1) thus rolled by means of a transfer gripper (6) inserting them into the bottom die (7).

2. Device for implementing the method according to Claim 1, essentially consisting of a magazine (2) for feeding labels (1), and an arm (3) for taking the labels (1) individually out of the magazine (2) and transferring them, characterised in that it is also equipped with two rotary grippers (5) for rolling the said labels (1) into the shape of a cornet and a gripper (6) for transferring the rolled labels (1) into the bottom die (7) of the mould.

3. Device according to Claim 2, characterised in that the magazine (2) for receiving the labels (1) consists essentially of a device (9) for guiding the said labels (1) which has lateral holding and support runners (10), elastic front lateral lugs (11) for holding the said labels (1) at the extraction end of the device (9) and a means (12) for moving the labels (1) under load.

4. Device according to Claim 3, characterised in that the means (12) for moving the labels (1) under load is advantageously produced in the form of a carriage guided on the lateral holding runners (10) and loaded, through a cable (14), by a counterweight (15).

5. Device according to Claim 3, characterised in that it is provided with a means (13) for separating the labels when they are extracted from the magazine (2) which preferably consists of an air pipe extending transversely above the extraction end of the magazine (2) and connected to a source of pressurised air.

6. Device according to Claim 2, characterised in that the arm (3) is provided with gripping suckers (4) connected to a source of negative pressure and is advantageously mounted underneath the magazine (2) with the facility to pivot from a vertical position for extracting the labels (1) out of the magazine (2) to a horizontal position for transferring each label flat to the two rotary grippers (5), by actuation by means of a cylinder (16).

7. Device according to Claim 2, characterised in that the rotary grippers (5) are mounted on a support (17) and are each actuated, by means of an am (19), by a rotary cylinder (18) fixed to the said support (17).

8. Device according to either one of Claims 2 and 7,
characterised in that the transfer gripper (6) is mounted on a carriage (20) which can be moved by means of a cylinder (21) on a guide runner (22) between a position facing the support (17) for the rotary grippers (5) and the bottom die (7) of the mould, the said carriage (20) also having a support (23) for the perpendicular movement of the gripper (6) in the direction of the support (17) for the rotary grippers (5), actuated by a cylinder (24).

9. Device according to any one of Claims 2 to 8,
characterised in that it is mounted on a frame disposed in the operating position above or to one side of the injection moulding machine, in a way which can be retracted by pivoting, by sliding on runners fixed to the said moulding machine, or again by moving away simply by moving on a running carriage.

10. Device according to Claim 2, characterised in that the bottom die (7) of the mould has in its bottom a peripheral projection (25) for inserting the corresponding edge of the label (1).

11. Device according to any one of Claims 2 to 10,
characterised in that it includes a number of magazines (2), take-off arms (3), pairs of grippers (5) and transfer grippers (6) corresponding to the number of bottom dies (7) in a multi-cavity mould (8).

## Patentansprüche

1. Verfahren zum automatischen Herstellen von mit einem mit einem Etikett bekleideten Behältern, insbesondere für Behälter mit kreisförmigem Querschnitt, bei welchem im wesentlichen folgende Schritte durchgeführt werden: Die Etiketten (1) werden einzeln mittels eines Armes (3) einem Magazin (2) entnommen; die Etiketten (1) werden in die Matrize (7) einer Form eingeführt; die Form wird derart geschlossen, daß sich die Etiketten (1) gegen die Wandfläche der Form anlegen; dann wird Kunststoffmaterial, aus welchem der Behälter hergestellt werden soll, in die Form gespritzt; dadurch gekennzeichnet, daß die Etiketten (1) unter Verwendung von Greifdüsen (4) dem Magazin entnommen werden; daß die Etiketten (1) an zwei umlaufende Zangen (5) überstellt werden, welche sie zu Tütenform rollen; und daß die so gerollten Etiketten (1) von einer Transferzange (6) ergriffen werden, welche sie in die Matrize (7) einführt.

2. Vorrichtung zur Durchführung des Verfahrens nach Anspruch 1, welche im wesentlichen aufweist: ein Zuführmagazin (2) für Etiketten (1), einen Arm (3) zum einzelnen Entnehmen der Etiketten (1) aus dem Magazin (2) und zum Weitergeben der vereinzelten Etiketten, dadurch gekennzeichnet, daß sie zusätzlich zwei umlaufende Zangen (5) aufweist, durch welche die Etiketten (1) zu Tütenform gerollt werden, und eine Transferzange (6) aufweist, durch welche die gerollten Etiketten (1) in die Matrize (7) der Form überstellt werden.

3. Vorrichtung nach Anspruch 2, dadurch gekennzeichnet, daß das die Etiketten (1) aufnehmende Magazin im wesentlichen aufweist: eine Führungseinrichtung (9) für die Etiketten (1), die Gleitschienen (10) aufweist, durch welche die Etiketten getragen und in seitlicher Richtung positioniert werden, vorneliegende seitliche elastische Klauen (11), durch welche die Etiketten (1) am Abgabeende der Vorrichtung (9) gehalten werden, und unter Vorspannung stehende Vorschubmittel (12) für die Etiketten (1).

4. Vorrichtung nach Anspruch 3, dadurch gekennzeichnet, daß die unter Vorspannung stehenden Vorschubmittel (12) vorzugsweise einen Wagen aufweisen, der auf den zur seitlichen Führung dienenden Schienen (10) läuft und über ein Seil (14) durch ein Gegengewicht (15) vorgespannt ist.

5. Vorrichtung nach Anspruch 3, dadurch gekennzeichnet, daß sie eine Einrichtung (13) zum Vereinzeln der Etiketten bei ihrem Herausnehmen aus dem Magazin (2) aufweist, welche vorzugsweise eine Luftleiste umfaßt, die sich in transversaler Richtung oberhalb des Abgabeendes des Magazins (2) erstreckt und mit einer Druckluftquelle verbunden ist.

6. Vorrichtung nach Anspruch 2, dadurch gekennzeichnet, daß der Arm (3) mit Greifdüsen (4) versehen ist, die mit einer Unterdruckquelle verbunden sind, und vorzugsweise unterhalb des Magazins (2) so angeordnet ist, daß er aus einer vertikalen außerhalb des Magazines (2) liegenden Stellung zum Entnehmen der Etiketten (1) in eine horizontale Transferstellung verschwenkbar ist, in welcher die Etiketten jeweils einzeln eben an die beiden umlaufenden Zangen (5) übergeben werden, wobei die Umstellung des Armes (3) zwischen seinen beiden Stellungen unter Verwendung eines Arbeitszylinders (16) erfolgt.

7. Vorrichtung nach Anspruch 2, dadurch gekennzeichnet, daß die umlaufenden Zangen (5) auf einem Träger (17) angeordnet sind und jeweils unter Zwischenschaltung eines Armes (19) durch einen Rotations-Arbeitszylinder (18) bewegbar sind, der fest mit dem Träger (17) verbunden ist.

8. Vorrichtung nach einem der Ansprüche 2 und 7, dadurch gekennzeichnet, daß die Transferzange 6 auf einem Wagen (20) angebracht ist, der unter Verwendung eines Arbeitszylinders (21) auf einer Führungsschiene (22) zwischen einer ersten Stellung, in welcher er dem Träger (17) für die umlaufenden Zangen (5) gegenüberliegt, und der Matrize (7) der Form bewegbar ist, wobei der Wagen (20) darüber hinaus einen Träger (23) aufweist, der durch einen Arbeitszylinder (24) betätigbar ist und in senkrechter Richtung der Zange (6) in Richtung des Trägers (17) der umlaufenden Zangen (5) bewegbar ist.

9. Vorrichtung nach einem der Ansprüche 2-8, dadurch gekennzeichnet, daß sie auf einem Rahmen angeordnet ist, der in einer Arbeitstellung über oder neben der Spritzgießmaschine so angeordnet ist, daß er durch Verschwenken, durch Verschieben auf Führungsschienen, die mit der Spritzgießmaschine verbunden ist, oder durch Entfernen mittels einfachen Verlagerns auf einer Rollenbahn aus dem Weg bewegbar ist.

10. Vorrichtung nach Anspruch 2, dadurch gekennzeichnet, daß die Matrize (7) der Form in ihrem Boden mit einem in Umfangsrichtung verlaufenden Absatz (25) versehen ist, in welchen der entsprechende Rand des Etiketts (1) einführbar ist.

11. Vorrichtung nach einem der Ansprüche 2-10, dadurch gekennzeichnet, daß sie eine Mehrzahl von Magazinen (2), von Greifarmen (3), von Zangenpaaren (5) und von Transferzangen (6) aufweist, die der Anzahl von Matrizen (7) einer mit einer Mehrzahl von Ausnehmungen (8) versehenen Form entspricht.
